# EUROPÄISCHE PATENTANMELDUNG

(11) **EP 4 703 177 A1**
(43) Veröffentlichungstag der Anmeldung: **04.03.2026**
(21) Anmeldenummer: 25195361.8
(22) Anmeldetag: 12.08.2025
(51) Int. Cl.: B60L 1/00, B60L 53/14, B60P 3/32, B60P 3/36, B60R 16/03, H02J 1/14, H02J 105/30, B60R 16/033, B60R 16/037

(54) **VERFAHREN ZUM BEREITSTELLEN EINES AUTARKIEMODUS IN EINEM FAHRZEUG, SOWIE STEUERGERÄT UND FAHRZEUG**

(30) Priorität: 29.08.2024 DE 102024208210
(71) Anmelder: VOLKSWAGEN AG, 38440 Wolfsburg (DE)
(72) Erfinder: Theuergarten, Jean-Michele, 38440 Wolfsburg (DE); Kosmalla, Jens, 38440 Wolfsburg (DE)

(57) **Zusammenfassung**

Die Erfindung betrifft ein Verfahren zum Bereitstellen eines Autarkiemodus in einem abgestellten Fahrzeug (10), sowie ein Steuergerät (40) zur Verwirklichung des Verfahrens sowie ein Fahrzeug (10), in dem das Verfahren zum Einsatz gelangt. Bei dem erfindungsgemäßen Verfahren wird ein Energieeingang aus mindestens einer externen Energiequelle (12) sowie ein Energieverbrauch des abgestellten Fahrzeugs (12) erfasst und eine Energiebilanz des Fahrzeugs (10) erstellt, bei der diese berücksichtigt werden. Ist diese Energiebilanz nicht negativ, kann der Autarkiemodus bereitgestellt werden, bei dem die Energiezufuhr zu dem mindestens einen Verbraucher (20) des Fahrzeugs (10) nicht unterbrochen wird beziehungsweise diese Abschaltung nicht ausgelöst wird.

## Beschreibung

Die Erfindung betrifft ein Verfahren zum Bereitstellen eines Autarkiemodus in einem abgestellten Fahrzeug, sowie ein Steuergerät zur Verwirklichung des Verfahrens sowie ein Fahrzeug, in dem das Verfahren zum Einsatz gelangt. Bei dem erfindungsgemäßen Verfahren wird ein Energieeingang aus mindestens einer externen Energiequelle sowie ein Energieverbrauch des abgestellten Fahrzeugs erfasst und eine Energiebilanz des Fahrzeugs erstellt, bei der diese berücksichtigt werden. Ist diese Energiebilanz nicht negativ, kann der Autarkiemodus bereitgestellt werden, bei dem die Energiezufuhr zu dem mindestens einen Verbraucher des Fahrzeugs nicht unterbrochen wird beziehungsweise diese Abschaltung nicht ausgelöst wird.

Von Campingfahrzeugen ist es bekannt, dass bei abgestelltem Fahrzeug zum Schutz der Energieressourcen eine Abschaltung der Verbraucher auf der Fahrzeugbatterie während der Nutzung, beispielsweise durch das Entertainment, erfolgt (Fahrzeugenergieschutz). Häufig erfolgt dies nach 30 Minuten und auch dann, wenn das Fahrzeug an eine externe Energieversorgung angeschlossen ist. Dies ist für die Nutzer eines solchen Campingfahrzeuges unkomfortabel und störend.

Um dem zu entgehen, verbauen einige Hersteller ein zusätzliches Versorgungsnetz im Fahrzeug, das nicht mit der Fahrzeugbatterie und deren Ressourcenmanagement gekoppelt ist. Dies ist aber mit zusätzlichem Gewicht und damit zusätzlichen Fahrzeugemissionen verbunden und verursacht zudem zusätzliche Kosten.

Es ist daher Aufgabe der Erfindung, eine Lösung vorzuschlagen, wie bei angeschlossener externer Energiezufuhr eine Abschaltung wie zuvor beschrieben verhindert werden kann, sodass beispielsweise das Infotainment im Fahrzeug, seine Beleuchtung und dergleichen ungestört genutzt werden kann.

Die Aufgabe der Erfindung wird gelöst mit einem Verfahren, einem Steuergerät und einem Fahrzeug gemäß der unabhängigen Ansprüche. Weitere bevorzugte Ausgestaltungen der Erfindung ergeben sich aus den übrigen, in den Unteransprüchen genannten Merkmalen.

Das erfindungsgemäße Verfahren zur Bereitstellung eines Autarkiemodus in einem abgestellten Fahrzeug erfolgt mit zumindest den folgenden Schritten:
a. Erfassung, ob das abgestellte Fahrzeug an mindestens eine externe Energiequelle angeschlossen und/oder in Betrieb ist,
b. Erfassung des Energieeingangs von der mindestens einen Energiequelle,
c. Erfassung des aktuellen Energieverbrauchs durch mindestens einen Verbraucher des Fahrzeugs,
d. Erstellen einer Energiebilanz für das abgestellte Fahrzeug unter Berücksichtigung des Energieeingangs der mindestens einen Energiequelle und des Energieverbrauchs des mindestens einen Verbrauchers, und
e. wenn die Energiebilanz nicht negativ ist, Bereitstellung des Autarkiemodus, bei dem eine automatische Abschaltung der Energiezufuhr zu dem mindestens einen Verbraucher unterdrückt und/oder nicht ausgelöst wird.

Das Verfahren dient also dazu, einen Autarkiemodus bereitzustellen. Der Autarkiemodus beinhaltet, dass bei einem ausreichendem Vorhandensein von (elektrischer) Energie beziehungsweise ausreichender Energiezufuhr nicht, wie im Stand der Technik üblich, eine Abschaltung der Energiezufuhr zu Verbrauchern an und/oder im abgestellten Fahrzeug erfolgt. Dies kann durch eine Unterdrückung des auslösenden Signals erfolgen und/oder indem das Signal zum Abschalten der Energiezufuhr zu Verbrauchern nicht ausgelöst wird.

Das Verfahren ist für Fahrzeuge vorgesehen. Als Fahrzeuge werden dabei sämtliche Fortbewegungsmittel verstanden, die nicht nur zur eigentlichen Fortbewegung genutzt werden, sondern auch zum Aufenthalt dienen. Dazu zählen unter anderem Campingfahrzeuge, aber auch generell Personenkraftwagen, Lastkraftwagen, Transporter, aber auch Wasserfahrzeuge (Boote).

Demnach soll der Begriff des abgestellten Fahrzeugs so verstanden werden, dass sich das Fahrzeug nicht fortbewegt, sondern in einer Ruheposition verbleibt. Bei einem Landfahrzeug kann dies eine Parkposition beziehungsweise das Abstellen auf einem Camping- oder sonstigen Standplatz umfassen, bei einem Wasserfahrzeug ein Anlegen an einem Liegeplatz oder eine Ankerposition. Das Fahrzeug befindet sich damit in einer Abstellposition.

Ist nun eine Abstellposition erreicht, soll zunächst in einem ersten Schritt erfasst werden, ob das abgestellte Fahrzeug an mindestens eine externe Energiequelle angeschlossen ist und/oder ob diese in Betrieb ist (Schritt a). Eine externe Energiequelle umfasst dabei jegliche Energiezufuhr, die nicht auf einen im Fahrzeug selbst vorgesehenen Energiespeicher zugreift, sondern bei der dem Fahrzeug Energie von außen zugeführt wird. Manche der möglichen Energiequellen sind fest am Fahrzeug verbaut, werden jedoch nur im Stand genutzt, sodass sie nur im Stand betrieben werden. Es wird also erfasst, ob dem Fahrzeug Energie in Form von elektrischem Strom zugeführt wird.

Ist dies der Fall, wird der Energieeingang von der mindestens einen Energiequelle quantitativ erfasst (Schritt b), also wieviel elektrischer Strom dem Fahrzeug von oder mittels der mindestens einen Energiequelle zugeführt wird.

Gleichzeitig oder zeitlich versetzt wird erfasst, ob und in welcher Menge ein Energieverbrauch des Fahrzeugs erfolgt (Schritt c). Der Energieverbrauch kann durch mindestens einen Verbraucher des Fahrzeugs, also mindestens einen Verbraucher in und/oder an dem Fahrzeug, erfolgen. Er greift dazu auf das Versorgungsnetz des Fahrzeugs zu.

Basierend auf dem zuvor erfassten Energieeingang und dem ermittelten Energieverbrauch wird eine Energiebilanz erstellt, bei der der Energieeingang der mindestens einen Energiequelle und der Energieverbrauch des mindestens einen Verbrauchers verglichen werden (Schritt d).

Ist die Energiebilanz nicht negativ, also gleichen sich der Energieeingang und der Energieverbrauch aus oder der Energieeingang ist höher als der Energieverbrauch, wird der Autarkiemodus bereitgestellt, der ein Auslösen der Abschaltung der Energiezufuhr zu dem mindestens einen Verbraucher und/oder dessen Auslösung verhindert (Schritt e). Demnach wird, wenn die Energiebilanz nicht negativ ist, die Energiezufuhr zu dem mindestens einen Verbraucher nicht abgeschaltet und der oder die Verbraucher können ungestört (weiter) genutzt werden.

Das Verfahren sollte fortlaufend oder in regelmäßigem zeitlichen Abstand ausgeführt werden, sodass Veränderungen in der Energiezufuhr und/oder dem Energieverbrauch zeitnah berücksichtigt werden können.

Das Verfahren wird auf einem Steuergerät oder mittels eines Steuergeräts ausgeführt, auf dem Anweisungen im Sinne eines Programmcodes beziehungsweise einer Software hinterlegt sind, deren Ausführung zur Verwirklichung des Verfahrens dient. Das Steuergerät ist dazu mit dem Versorgungsnetz des Fahrzeugs und/oder Subsystemen des Versorgungsnetzes verbunden, sodass es den Energieeingang und den Energieverbrauch erfassen kann und/oder übermittelt bekommt. Subsysteme des Versorgungsnetzes sind dabei als eigene, nachgeordnete Versorgungsnetze zu verstehen.

Auf dem Steuergerät beziehungsweise einer dort vorgesehenen oder damit verbundenen Speichereinrichtung können für die Auswertung relevante Informationen hinterlegt sein, die eine bessere Bewertung der verfügbaren Energie im Fahrzeug und des Verbrauchs ermöglichen. Dies kann beispielsweise Grenzwerte umfassen, die einen Überschuss des Energieeingangs gegenüber dem Energieverbrauch umfassen, um beispielsweise eine (Mit-)Nutzung der Energie eines Energiespeichers des Fahrzeugs zu vermeiden, oder aber einen Grenzwert, wie weit diese Energie aus einem Energiespeicher mitgenutzt werden kann, ohne dass spätere Fortsetzen der Fahrt des Fahrzeugs oder Notfunktionen einzuschränken beziehungsweise zu verhindern.

Das Steuergerät kann ein im Fahrzeug vorgesehenes Steuergerät sein, welches das erfindungsgemäße Verfahren (mit) ausführt, aber auch ein Steuergerät, das vorrangig zur Ausführung des Verfahrens vorgesehen ist und/oder nachträglich in das Fahrzeug verbaut wird.

Erfindungsgemäß ist auch ein Fahrzeug vorgesehen, in dem das erfindungsgemäße Verfahren zur Anwendung gelangt und/oder in dem ein wie zuvor beschriebenes Steuergerät zum Einsatz kommt.

Eine erste Ausgestaltung des Verfahrens sieht vor, dass die Nutzung des Autarkiemodus durch einen Fahrzeugnutzer aktiviert wird. Ein Fahrzeugnutzer kann jede Person sein, die das Fahrzeug im abgestellten Zustand nutzt. Gemäß dieser Ausgestaltung soll der Autarkiemodus nicht automatisch genutzt werden, wenn er bereitgestellt werden kann, sondern er soll aktiv von einem Fahrzeugnutzer ausgelöst werden. Dazu kann beispielsweise eine Mitteilung mittels einer im Fahrzeug befindlichen Anzeigeeinrichtung bereitgestellt werden, dass der Autarkiemodus bereitgestellt wird und genutzt werden kann. Wird dann ein Verbraucher in Betrieb genommen, kann damit der Autarkiemodus aktiviert werden. Alternativ oder zusätzlich kann die Aktivierung auch durch eine Eingabe an einer Mensch-Maschine-Schnittstelle, beispielsweise an der Anzeigeeinrichtung, erfolgen.

Mit dieser Ausgestaltung wird erreicht, dass das Versorgungsnetz des Fahrzeugs, mit Ausnahme von eventuell vorhandenen stetigen Verbrauchern wie Kühlschrank, Notbeleuchtung und gegebenenfalls Belüftung, die unabhängig von anderen Verbrauchern anhaltend betrieben werden sollen oder müssen, im Ruhe- beziehungsweise Schlafmodus verbleibt, bis tatsächlich ein Nutzungsbedarf besteht. Dies kann beispielsweise sinnvoll sein, wenn das Fahrzeug abgestellt und an eine externe Energiequelle angeschlossen ist, die Fahrzeugnutzer aber zeitweise nicht am Fahrzeug sind. Alternativ kann dies sinnvoll sein, wenn das Fahrzeug über einen Energiespeicher verfügt, der mittels der externen Energiequelle aufgeladen wird.

Gemäß einer zweiten Ausgestaltung des Verfahrens soll der Autarkiemodus bereitgestellt werden, bis der Energieeingang den Energieverbrauch nicht mehr übersteigt oder erreicht. Da das Verfahren, wie zuvor beschrieben, vorzugsweise kontinuierlich und/oder wiederholt durchgeführt wird, kann festgestellt werden, wenn der Energieeingang sinkt oder gänzlich abbricht. Dies kann beispielsweise erfolgen, wenn die mindestens eine Energiequelle eine Anlage zur Gewinnung von Solarstrom ist und nicht mehr ausreichend Strom erzeugt werden kann. Demnach kann der Energieeingang nicht mehr gleich hoch wie der Energieverbrauch oder höher sein, sondern ist vielmehr geringer. Auch ein deutlicher Anstieg im Energieverbrauch kann zu dieser Situation führen. In diesen Fällen kann die Energiebilanz des Fahrzeugs negativ werden. Um die Energieressourcen des Fahrzeugs zu schonen, soll dann der Autarkiemodus beendet werden, sodass nun die Abschaltung der Energiezufuhr zu dem mindestens einen Verbraucher nach einer vordefinierten Zeitspanne abgeschaltet wird. Alternativ zur Abschaltung der Energieversorgung kann der Fahrzeugnutzer zum Abschalten des mindestens einen Verbrauchers aufgefordert werden, sobald der Energieeingang den Energieverbrauch nicht mehr übersteigt oder erreicht. Dies ist schonender für die Verbraucher, denn wenn deren Energieversorgung abgeschaltet wird, werden deren Steuergeräte "hart" abgeschaltet. Dabei wird der letzte Zustand nicht persistiert und Daten können verloren gehen. Zudem ist es Empfehlenswert dem Verbraucher den Bedarf der Abschaltung zu kommunizieren, weil er so den Ruhezustand gemäß Abschaltprozedur vornehmen kann. Damit werden aktive Rechenprozessen abgeschlossen, was für die Handhabung der Verbraucher relevant ist.

Es kann sinnvoll sein, wenn der Autarkiemodus nach einer vordefinierten Zeitspanne abgeschaltet wird. Eine solche Zeitspanne kann beispielsweise 24 Stunden betragen. Sie kann herstellerseitig und/oder von einem Fahrzeugnutzer festgelegt werden. Damit wird erreicht, dass das Fahrzeug beziehungsweise dessen Versorgungsnetz und Verbraucher bei Nichtnutzung in den Ruhe- beziehungsweise Schlafmodus wechseln kann, beispielsweise wenn das Fahrzeug abgestellt wurde aber nicht oder noch nicht alle Systeme abgeschaltet wurden, beispielsweise weil es vergessen wurde. Dies kann sicherheitsrelevant sein.

Der mindestens eine Energieverbraucher kann ein Infotainmentsystem, eine Innenbeleuchtung, eine Außenbeleuchtung, eine Suchbeleuchtung und/oder eine Klimatisierungseinrichtung umfassen.

Infotainmentsysteme sind hinlänglich bekannt und dienen der Beschaffung und Übermittlung von Informationen und Unterhaltungsinhalten an den oder die Fahrzeugnutzer. Die Informationen können fahrzeugbezogene Informationen sein aber auch externe Inhalte. Unterhaltungsinhalte können Audio- und Videoinhalte, Bilder und dergleichen umfassen. Sie können online, also über das (mobile) Internet, abgerufen werden aber auch mittels externer Subsysteme bereitgestellt und an das Infotainmentsystem übermittelt werden. Solche Subsysteme können Smartphones, Notebooks, Spielekonsolen und dergleichen sein, aber auch ein Datenträger, der von dem Infotainmentsystem ausgelesen werden kann, wie beispielsweise ein USB-Stick. Ein Infotainmentsystem kann weitere Subsysteme aufweisen oder in diese aufgeteilt sein, wie beispielsweise Lautsprecher, Verstärker, verschiedene Eingangssysteme für Infotainmentinhalte und dergleichen.

Eine Innenbeleuchtung kann eine oder mehrere Lichtquellen im Inneren des Fahrzeugs umfassen. Diese können ebenfalls in Subsystemen organisiert werden, beispielsweise als Subsystem Küchenbereich, Subsystem Badbereich, Subsystem Schlafbereich und so weiter. Eine Außenbeleuchtung soll die nähere Umgebung des Fahrzeugs beleuchten, beispielsweise um sich dort aufzuhalten. Auch hier ist eine Unterteilung in Subsysteme denkbar.

Ein Fahrzeug kann eine Suchbeleuchtung aufweisen, um bedarfsweise eine Umgebung des Fahrzeugs hell auszuleuchten. Auch diese zählt dann zu den Verbrauchern.

Zusätzlich zu einer Belüftung des Fahrzeugs, die bei nicht zu öffnenden Fenstern als Zwangsbelüftung und damit stetiger Verbrauch erfolgt, kann eine Klimatisierung des Fahrzeugs erfolgen, die von einem Fahrzeugnutzer ausgelöst beziehungsweise gestartet wird. Die Einrichtung zur Klimatisierung, also zur Erzeugung eines temperierten Mediums und das zugehörige Verteilsystem, sind dann Verbraucher im Sinne der Erfindung, die wiederum in Subsystemen organisiert sein können.

Das erfindungsgemäße Verfahren kann derart weitergebildet sein, dass im Autarkiemodus mindestens einer von mehreren Verbrauchern und/oder mindestens ein Subsystem mindestens eines Verbrauches abgeschaltet wird. Demnach soll eine Reduzierung des Energieverbrauchs bewirkt werden, die durch das Abschalten mindestens eines Verbrauches und/oder mindestens eines Subsystems eines oder mehrerer Verbraucher erreicht werden kann.

So können beispielsweise Teile der Beleuchtung abgeschaltet werden oder ein Teil der Lautsprecher des Infotainmentsystems. Dies kann automatisch oder anhand zuvor festgelegter Präferenzen des Fahrzeugnutzers erfolgen, oder durch einen Auswahldialog an einer Benutzerschnittstelle. Diese Teilabschaltung kann beispielsweise dann erfolgen, wenn sich die Energiezufuhr verringert, jedoch noch nicht das Niveau des Verbrauchs erreicht oder unterschreitet beziehungsweise wenn noch Energie aus dem Energiespeicher des Fahrzeugs genutzt werden kann, oder wenn weitere Verbraucher durch den Fahrzeugnutzer in Betrieb genommen werden, ohne dass sich die Energiezufuhr erhöht. Damit kann die erreichbare Laufzeit des Autarkiemodus verlängert beziehungsweise optimiert werden.

Alternativ oder zusätzlich kann die mindestens eine Energiequelle einen Anschluss an ein stationäres Versorgungsnetz, eine Solaranlage, eine Brennstoffzelle und/oder ein Windrad umfassen.

Ein stationäres Versorgungsnetz ist dabei als ein Netz zur Bereitstellung von elektrischem Strom zu verstehen, der durch einen lokalen Energieversorger bereitgestellt wird. Anschlüsse dafür sind beispielsweise auf Campingplätzen, an Bootsliegeplätzen und dergleichen zu finden.

Eine Solaranlage ist als technische Anlage zur Umwandlung von Sonnenenergie in eine andere Energieform, hier: elektrischer Strom, zu verstehen. Dies kann eine Anlage sein, die am Fahrzeug verbaut oder von diesem mitgeführt wird, oder aber zur Nutzung für den Fahrzeugnutzer zugänglich ist.

Eine Brennstoffzelle wandelt die chemische Reaktionsenergie eines kontinuierlich zugeführten Brennstoffes und eines Oxidationsmittels in elektrische Energie um. Damit kann sie zur Energiegewinnung des Fahrzeugs genutzt und zu diesem Zwecke mitgeführt werden.

Ein Windrad wandelt Windenergie in elektrischen Strom um. Ein Windrad kann an oder auf einem Fahrzeug angeordnet werden, um sich auch unabhängig mit Strom versorgen zu können.

Wie bereits erläutert, kann ein Fahrzeug einen Energiespeicher aufweisen, der (auch) Energie für die Nutzung des abgestellten Fahrzeugs bereitstellt. Über einen solchen Energiespeicher können auch die notwendigen beziehungsweise stetigen Verbraucher wie Kühlschrank, Notbeleuchtung und Belüftung betrieben werden. Um dies zu gewährleisten sowie das Fortsetzen der Fahrt nicht einzuschränken, kann ein Grenzwert vorgesehen werden, bis zu dem Energie aus dem Energiespeicher für den mindestens einen Verbraucher mitgenutzt werden kann.

Ist Energie oberhalb des Grenzwertes in dem Energiespeicher vorhanden, soll diese Menge als frei verfügbar angesehen werden und soll damit als verfügbar in die Energiebilanz eingehen. Damit erhöht sie das Niveau der verfügbaren Energie aus Energieeingang und verfügbarer gespeicherter Energie, sodass der Autarkiemodus länger genutzt werden kann.

Üblicherweise wird zudem die Energie der mindestens einen externen Energiequelle dem Energiespeicher zugeführt und von dort in das Versorgungsnetz des Fahrzeugs beziehungsweise dessen Subsysteme eingespeist. Dies wird durch das Steuergerät überwacht und gesteuert.

Mit dem erfindungsgemäßen Verfahren, Steuergerät und Fahrzeug kann ein abgestelltes Fahrzeug komfortabel genutzt werden, also ohne dass seine Verbraucher nach einer festen Zeitspanne abgeschaltet werden, sofern ein ausreichend hoher Energieeingang von mindestens einer externen Energiequelle vorhanden ist. In den optionalen Ausgestaltungen werden Lösungen aufgezeigt, um das Verfahren an verschiedene Einsatzsituationen anzupassen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Prinzipskizze eines Fahrzeugs mit externen Energiequellen,
- Figur 2: eine schematische Darstellung einer beispielhaften Konstellation in einem Fahrzeug, und
- Figur 3: ein Ablaufschema für das erfindungsgemäße Verfahren.

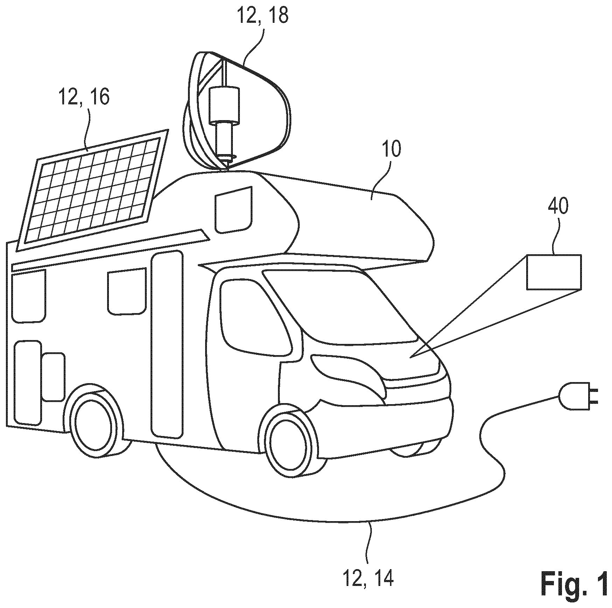

Figur 1 zeigt skizzenhaft ein Fahrzeug 10 in Form eines Wohnmobils. Dieses ist mit drei externen Energiequellen 12 ausgerüstet, nämlich einem Anschluss 14 an ein stationäres Versorgungsnetz, einer Solaranlage 16 und einem Windrad 18. Auch eine Brennstoffzelle wäre als externe Energiequelle 12 möglich. Die externen Energiequellen 12 können einzeln oder in beliebigen Kombinationen zur Gewinnung beziehungsweise Erzeugung von elektrischem Strom genutzt werden.

Das Fahrzeug 10 verfügt über ein Steuergerät 40, das zur Verdeutlichung aus der Darstellung herausgezogen wurde und dazu dient, das erfindungsgemäße Verfahren zu verwirklichen. Im Fahrzeug 10 selbst sind verschiedene Verbraucher 20 vorgehalten, die mit elektrischem Strom betrieben werden sollen, unter anderem ein Infotainmentsystem. Das Fahrzeug 10 verfügt zudem über einen Energiespeicher (nicht dargestellt).

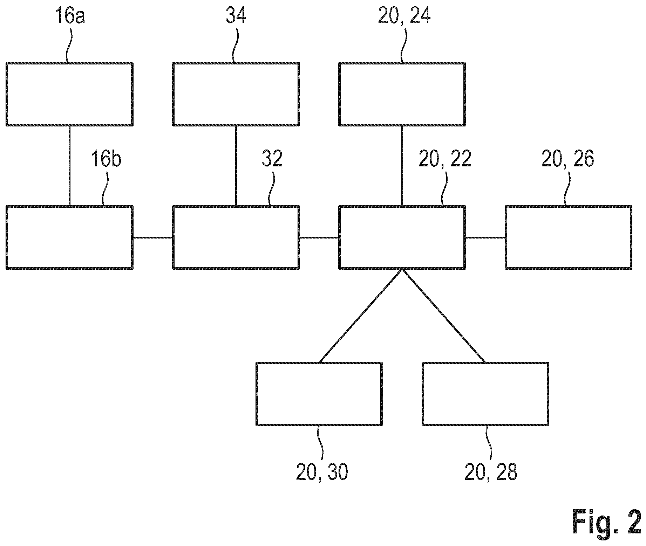

Das im Fahrzeug 10 vorgesehene Infotainmentsystem 22 als Verbraucher 20 ist in Figur 2 zusammen mit einer beispielhaften Systemintegration dargestellt. Diese ist nicht abschließend, sondern nur als Ausschnitt zu verstehen.

Das System gemäß Figur 2 greift beispielhaft auf die Solaranalage 16 als externe Energiequelle 12 zurück. Die Solaranalage 16 besteht dabei aus den Subsystemen Solarzelle(n) 16a und Solarregler 16b. Der Solarregler 16b stellt dabei Kenndaten bezüglich der Energieerzeugung an das zentrale Energiemanagement 32 bereit. Dieses zentrale Energiemanagement 32 ist auch mit dem Energiespeicher 34 des Fahrzeugs 10 verbunden und kann daher dessen Ladezustand beziehungsweise die Menge der gespeicherten Energie abrufen.

Ferner ist das zentrale Energiemanagement 32 mit dem Infotainmentsystem 22 des Fahrzeugs 10 verbunden, das zudem verschiedene Subsysteme aufweist. Dazu zählt zunächst ein Smartphone 24 des Fahrzeugnutzers, mit dem dieser beispielsweise Musik oder Filme auf Anzeigeeinrichtungen beziehungsweise Lautsprechern des Infotainmentsystems 22 übertragen kann. Das Smartphone 24 kann jedoch auch, wenn es nicht mit dem Infotainmentsystem 22 interagiert, als eigenständiger Verbraucher 20 verstanden werden. Ein weiteres Subsystem des Infotainmentsystems 22 ist ein Bediendisplay 26, über das Eingaben an das Infotainmentsystem 22 erfolgen können. Schließlich gehören Lautsprecher 28 als Subsystem zu dem Infotainmentsystem 22 sowie eine Online-Unit 30, mittels derer das Infotainmentsystem 22 einen eigenständigen Zugang zum mobilen Internet verwirklichen kann.

In stark vereinfacht dargestellter Weise erfolgt das Energiemanagement derart, dass die mittels der Solaranlage 16 erzeugte Energie dem Energiespeicher 34 zugeführt wird und bei Bedarf von einem oder mehreren Verbrauchern 20 direkt von dem Energiespeicher 34 aus zugeführt wird (nicht durch Figur 2 veranschaulicht). Dabei stellt die Solaranlage 16 mittels des Solarreglers 16b Informationen an das zentrale Energiemanagement 32 bereit, die die Menge des gewonnenen und eingespeisten elektrischen Stroms kennzeichnen. Das zentrale Energiemanagement 32 ermittelt und/oder erhält auch die Verbrauchsdaten der Verbraucher 20 im Fahrzeug.

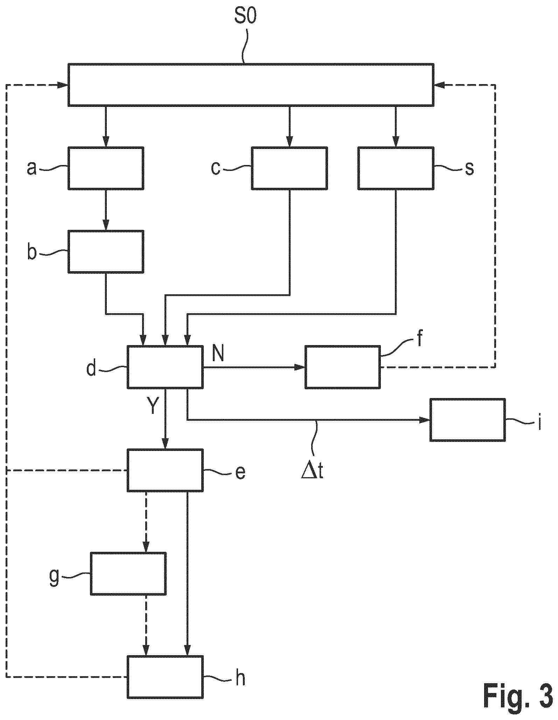

Das zentrale Energiemanagement 32 ist als Software auf dem Steuergerät 40 verwirklicht und führt dabei auch das erfindungsgemäße Verfahren aus. Dazu sei auf Figur 3 verwiesen.

Bevor das Verfahren beginnen kann, muss das Fahrzeug 10 abgestellt werden und, damit der Autarkiemodus erreicht werden kann, mindestens eine externe Energiequelle 12 angeschlossen werden. Dann wird das Verfahren gestartet (Schritt S0). Der Start des Verfahrens kann manuell durch den Fahrzeugnutzer initiiert werden, oder durch die Detektion einer auslösenden Bedingung, wie beispielsweise den Anschluss der mindestens einen Energiequelle 12 an das Fahrzeug 10.

Sodann wird in Schritt a erfasst, ob (beziehungsweise dass) die mindestens eine externe Energiequelle 12 angeschlossen ist und in Schritt b die Menge der gewonnenen oder erzeugten Energie bestimmt. Diese Information geht in die Energiebilanz ein, die in Schritt d erstellt wird.

Parallel zu den Schritten a und b wird erfasst, welcher Energieverbrauch im Fahrzeug 10 durch den mindestens einen Verbraucher 20 entsteht (Schritt c). Auch dies geht in die Energiebilanz ein.

Da das Fahrzeug 10 in dieser beispielhaften Ausführungsform einen Energiespeicher 34 aufweist, wird dessen Speicherstand ebenfalls in der Energiebilanz berücksichtigt (Schritt S).

Diese Energiebilanz erfolgt in Schritt d. Ist sie nicht negativ (Y in Figur 3), wird der Autarkiemodus bereitgestellt (Schritt e). Ist sie negativ (N in Figur 3), erfolgt keine Bereitstellung des Autarkiemodus, vielmehr erfolgt die Abschaltung der Energiezufuhr zu den Verbrauchern 20 im Fahrzeug 10 nach einer festgelegten Zeitspanne (Schritt f) zum Schutz der Energieversorgung des Fahrzeugs 10.

Das Verfahren wird fortlaufend wiederholt, was durch die strichlierten Pfeile ausgehend von den Schritten e und f zu Schritt S0 veranschaulicht wird. Damit kann auf eine Erhöhung oder Absenkung der zugeführten Energie aus der mindestens einen externen Energiequelle und/oder eine Veränderung des Energieverbrauchs jederzeit reagiert werden. Wird dabei die Energiebilanz negativ, wird der Autarkiemodus abgeschaltet und die übliche, oben bereits genannte Abschaltung nach einer vorgegebenen Zeit der Nutzung wieder aktiviert. Im Fall der negativen Energiebilanz erfolgt das Verfahren wieder über Schritt f.

Nach der Bereitstellung des Autarkiemodus in Schritt e kann dieser von dem Fahrzeugnutzer aktiviert werden (optionaler Schritt g) oder durch eine (weitere) Nutzung mindestens eines Verbrauchers 20 genutzt werden.

Um die Energieressourcen zu schonen und/oder ein vergessenes Abschalten von Verbrauchern 20 im Fahrzeug 10 zu kompensieren, soll die Bereitstellung des Autarkiemodus nach einer vordefinierten Zeitspanne Δt, die beispielsweise 24 Stunden betragen kann, erfolgen (Schritt i).

Wie bereits oben erläutert, weist das Fahrzeug 10 hier einen Energiespeicher 34 auf. Ist in diesem genug Energie gespeichert, um das Fortsetzen der Fahrt nicht zu beeinträchtigen, kann die darüber hinausgehende Energiemenge, die dann also frei verfügbar ist, den Verbrauchern 20 mit zur Verfügung gestellt werden.

Sinkt der Energieeingang und/oder steigt der Verbrauch, kann zunächst, statt einem vorzeitigen Beenden des Autarkiemodus, die Energiezufuhr zumindest einem Verbraucher 20 und/oder mindestens einem Subsystem mindestens eines Verbrauchers 20 abgeschaltet werden (Schritt h). Damit können geringere Veränderungen der Energiebilanz kompensiert werden, ohne den Autarkiemodus gänzlich abzustellen. Auch nach der Abschaltung einzelner Verbraucher 20 und/oder ihrer Subsysteme wird das Verfahren fortgeführt.

Das Verfahren wird beendet, wenn die beschriebene Zeitspanne Δt seit Bereitstellung des Autarkiemodus abgelaufen ist (Schritt i), durch ein manuelles Abschalten mittels Infotainmentsystem oder das Erreichen einer negativen Energiebilanz in Schritt d.

### Bezugszeichenliste

- 10: Fahrzeug
- 12: externe Energiequelle
- 14: Anschluss an stationäres Versorgungsnetz
- 16: Solaranlage
- 16a: Solarzellen
- 16b: Solarregler18 Windrad
- 20: Verbraucher
- 22: Infotainmentsystem
- 24: Smartphone
- 26: Bediendisplay
- 28: Lautsprecher
- 30: Online-Unit
- 32: zentrales Energiemanagement
- 34: Energiespeicher im Fahrzeug
- 40: Steuergerät
- S0: Verfahrensschritt
- a...i, S: Verfahrensschritte
- Δt: Zeitspanne

## Patentansprüche

1. Verfahren zur Bereitstellung eines Autarkiemodus in einem abgestellten Fahrzeug (10) mit zumindest den folgenden Schritten:
a. Erfassung, ob das abgestellte Fahrzeug (10) an mindestens eine externe Energiequelle (12) angeschlossen und/oder in Betrieb ist,
b. Erfassung des Energieeingangs von der mindestens einen Energiequelle (12),
c. Erfassung des aktuellen Energieverbrauchs durch mindestens einen Verbraucher (20) des Fahrzeugs (10),
d. Erstellen einer Energiebilanz für das abgestellte Fahrzeug (10) unter Berücksichtigung des Energieeingangs der mindestens einen Energiequelle (12) und des Energieverbrauchs des mindestens einen Verbrauchers (20), und
e. wenn die Energiebilanz nicht negativ ist, Bereitstellung des Autarkiemodus, bei dem eine automatische Abschaltung der Energiezufuhr zu dem mindestens einen Verbraucher (20) unterdrückt und/oder nicht ausgelöst wird.

2. Verfahren nach Anspruch 1, **dadurch gekennzeichnet, dass** die Nutzung des Autarkiemodus durch einen Fahrzeugnutzer aktiviert wird.

3. Verfahren nach Anspruch 1 oder 2, **dadurch gekennzeichnet, dass** der Autarkiemodus bereitgestellt wird, bis der Energieeingang den Energieverbrauch nicht mehr übersteigt oder erreicht.

4. Verfahren nach einem der vorhergehenden Ansprüche, **dadurch gekennzeichnet, dass** der Autarkiemodus nach einer vordefinierten Zeitspanne (Δt) abgeschaltet wird.

5. Verfahren nach einem der vorhergehenden Ansprüche, **dadurch gekennzeichnet, dass** der mindestens eine Energieverbraucher (20) ein Infotainmentsystem (22), eine Innenbeleuchtung, eine Außenbeleuchtung, eine Suchbeleuchtung und/oder eine Klimatisierungseinrichtung umfasst.

6. Verfahren nach einem der vorhergehenden Ansprüche, **dadurch gekennzeichnet, dass** im Autarkiemodus mindestens einer von mehreren Verbrauchern (20) und/oder mindestens ein Subsystem mindestens eines Verbrauches (20) abgeschaltet wird.

7. Verfahren nach einem der vorhergehenden Ansprüche, **dadurch gekennzeichnet, dass** die mindestens eine Energiequelle (12) einen Anschluss (14) an ein stationäres Versorgungsnetz, eine Solaranlage (16), eine Brennstoffzelle und/oder ein Windrad (18) umfasst.

8. Verfahren nach einem der vorhergehenden Ansprüche, **dadurch gekennzeichnet, dass** bei Vorhandensein von mindestens einem Energiespeicher (34) eine darin frei verfügbare gespeicherte Energiemenge in die Energiebilanz eingeht.

9. Steuergerät (40), ausgebildet und eingerichtet zur Ausführung eines Verfahrens nach einem der vorhergehenden Ansprüche.

10. Fahrzeug (10), ausgebildet und eingerichtet zur Ausführung eines Verfahrens nach einem der Ansprüche 1 bis 8 und/oder mit einem Steuergerät (40) nach Anspruch 9.
